# EUROPEAN PATENT SPECIFICATION

(11) **EP 4 251 807 B1**
(45) Date of publication and mention of the grant of the patent: **13.08.2025**
(21) Application number: 21815276.7
(22) Date of filing: 24.11.2021
(51) Int. Cl.: E01H 4/02, B66D 1/44

(54) **CRAWLER VEHICLE FOR THE PREPARATION OF SKI RUNS AND METHOD TO CONTROL A WINCH OF THE CRAWLER VEHICLE**
RAUPENFAHRZEUG ZUR VORBEREITUNG VON SKIPISTEN UND VERFAHREN ZUR STEUERUNG EINER SEILWINDE DES RAUPENFAHRZEUGS
VÉHICULE À CHENILLES POUR LA PRÉPARATION DE PISTES DE SKI ET PROCÉDÉ DE COMMANDE D'UN TREUIL DU VÉHICULE À CHENILLES

(30) Priority: 24.11.2020 IT 202000028169
(43) Date of publication of application: 04.10.2023
(73) Proprietor: PRINOTH S.p.A., 39049 Vipiteno (BZ) (IT)
(72) Inventor: KIRCHMAIR, Martin, 39049 Vipiteno (BZ) (IT); PAOLETTI, Alberto, 39049 Vipiteno (BZ) (IT); UNTERHOLZNER, Markus, 39049 Vipiteno (BZ) (IT); MAURER, Gregor, 39049 Vipiteno (BZ) (IT); SALIS, Francesco, 39049 Vipiteno (BZ) (IT)
(74) Representative: Studio Torta S.p.A.
(86) International application number: PCT/IB2021/060931
(87) International publication number: WO 2022/112970

(56) References cited:
- WO-A1-2007/000216
- WO-A1-2011/110547

## Description

### CROSS-REFERENCE TO RELATED APPLICATIONS

This patent application claims priority from Italian patent application no. 102020000028169 filed on November 24, 2020.

### TECHNICAL FIELD

The present invention relates to a crawler vehicle for the preparation of ski runs.

### BACKGROUND ART

Generally, a crawler vehicle of the type identified above comprises a frame; a cabin mounted on the frame; a propulsion system mounted on the frame; driving wheels actuated by the propulsion system; and tools supplied by the propulsion system.

When the crawler vehicle is used for the preparation of particularly steep ski runs, the crawler vehicle is equipped with a winch, which is mounted on the frame and comprises an arm configured to guide and selectively orient the cable of the winch with respect to the frame around a determined axis.

Generally, the arm is rotated around the determined axis so as to control the arm when the free end of the cable of the winch is not anchored to a point outside the crawler vehicle. Generally, when the cable is under tension the arm is left free to orient itself around the axis, thus the arm in this configuration is aligned with the portion of cable outside the arm.

When the direction of the force exerted by the cable on the crawler vehicle does not pass through the barycentre of the crawler vehicle, said force applies a yawing torque to the crawler vehicle. In order to overcome this drawback, document No. WO 2007/000216 A1 teaches how to automatically compensate the yawing torque through a torque applied to the arm so as to arrange the arm in a determined position in which the prolongation of the cable outside the crawler vehicle is aligned with the barycentre of the crawler vehicle. Theoretically, in this manner, the yawing torque is eliminated.

The automatic compensation of the yawing torque provides for acquiring the angle of the arm with respect to the frame around the determined axis and the entity of the yawing torque so as to compute and automatically apply the corrective torque so as to compensate at least in part the yawing torque.

The application of the automatic compensation of the yawing torque limits possible beneficial uses thereof.

Document No. WO 2011/110547 discloses a further example of a vehicle for the maintenance of ski slopes comprising a winch mounted on a frame and including a winding drum and a winding motor associated with the drum, and a cable to be unwound and wound around the drum by the winding motor so as to generate a compensation for the pulling torque of the vehicle.

### DISCLOSURE OF INVENTION

The object of the present invention is to provide a crawler vehicle for the preparation of ski runs which reduces the drawbacks of the known art highlighted herein.

In accordance with the present invention, a crawler vehicle for the preparation of ski runs is realised; the crawler vehicle comprising:
- a frame;
- a winch mounted on the frame for selectively unwinding and winding a cable that can be anchored to a point outside the crawler vehicle;
- un arm, which is mounted swivelling with respect to the frame around a determined axis, and is configured to guide the cable;
- un actuating system of the arm around the determined axis, wherein the actuating system comprises two actuators coupled to the arm for selectively transmitting to the arm respective torques in opposite directions around the determined axis;
- a control device of the actuating system of the arm to select an operating mode between the operating modes of:
   - allowing the free rotation of the arm around the determined axis when the cable is under tension;
   - rotating the arm around the determined axis when the cable is under tension;
   - locking the position of the arm with respect to the frame when the cable is under tension.

In this manner, it is possible to control the yawing torque in any operating step and use it for driving the crawler vehicle, if necessary.

Furthermore, it is possible to transmit to the arm respective torques in opposite direction around the determined axis.

More specifically, each actuator is configured to transmit a variable torque between a minimum and a maximum value, so as to adjust the torque transmitted to the arm.

Practically, each actuator is a two-way flow hydraulic motor supplied with a pressure variable between a minimum and a maximum value.

In this manner, it is possible to selectively vary the direction of the torque transmitted to the arm.

With the purpose to control the at least one hydraulic motor, the actuating system comprises a hydraulic circuit supplied by a pressure source and comprises a pressure regulating valve, so as to adjust the force transmitted by the at least one actuator.

In particular, the actuating system comprises for each hydraulic motor a direction control valve for selectively excluding the supply to the respective hydraulic motor or supplying the respective hydraulic motor in a first direction of flow or supplying the respective hydraulic motor in a second direction of flow opposite to the first direction of flow.

In this manner, it is simultaneously possible to selectively eliminate the torque transmitted by the at least one actuator to the arm and/or to selectively vary the direction of said torque so as to control the steering of the crawler vehicle.

In particular, the control device is configured to manually control the pressure regulating valve and to control the direction control valves.

In this manner, an operator of the crawler vehicle can manually control the actuating system and set the desired operating mode.

In particular, the control device comprises a joystick, so as to allow the operator of the crawler vehicle to control the actuating system in a simple and intuitive manner.

A further object of the present invention is to provide a method to control the winch of the crawler vehicle which reduces the drawbacks highlighted herein of the known art.

In accordance with the present invention, a method to control the winch of the crawler vehicle as previously described is provided, the method comprising:
- applying a minimum torque to the arm through each actuator and opposite to the minimum torque applied by the other actuator so as to allow the arm to align with the cable.

Thanks to such method, it is possible to allow a free rotation of the arm around the determined axis.

In accordance with the present invention, a further method to control the winch of the crawler vehicle as previously described is provided, the method comprising:
- applying a maximum torque to the arm through each actuator and opposite to the maximum torque applied by the other actuator.

In this manner, it is possible to lock the position of the arm with respect to the frame. In the case where the crawler vehicle moves downhill, such method allows maintaining the crawler vehicle aligned with the forward direction preventing the crawler vehicle from yawing.

### BRIEF DESCRIPTION OF THE DRAWINGS

Further characteristics and advantages of the present invention will be apparent from the following description of a non-limiting example embodiment, with reference to the attached figures, wherein:
- Figure 1 is a side elevation view, with parts removed for clarity and with schematic parts, of a crawler vehicle realised according to the present invention;
- Figures 2 and 3 are top views, with parts removed for clarity and with schematic parts, of the crawler vehicle of Figure 1 in respective operating configurations; and
- Figure 4 is a schematic view of a detail of the crawler vehicle of Figure 1.

### BEST MODE FOR CARRYING OUT THE INVENTION

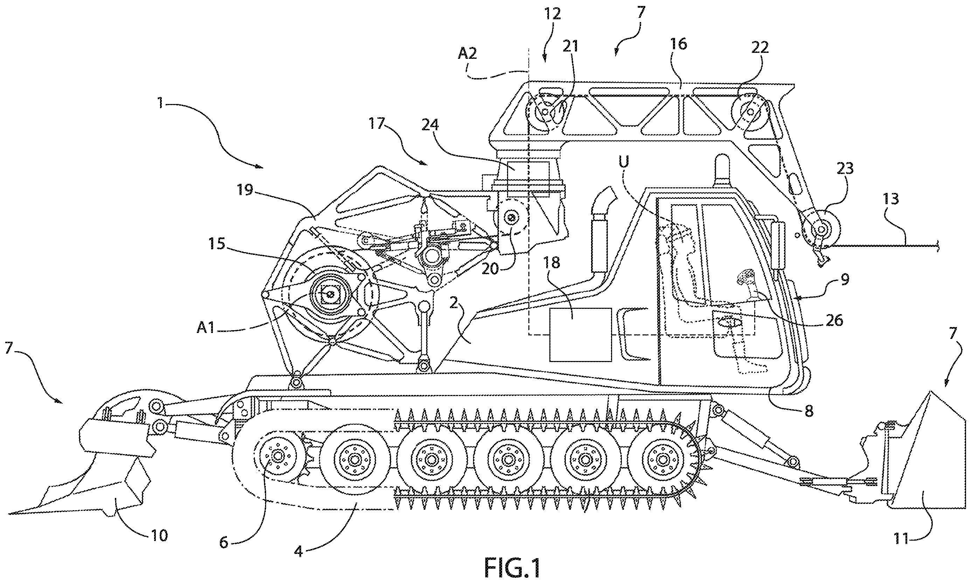

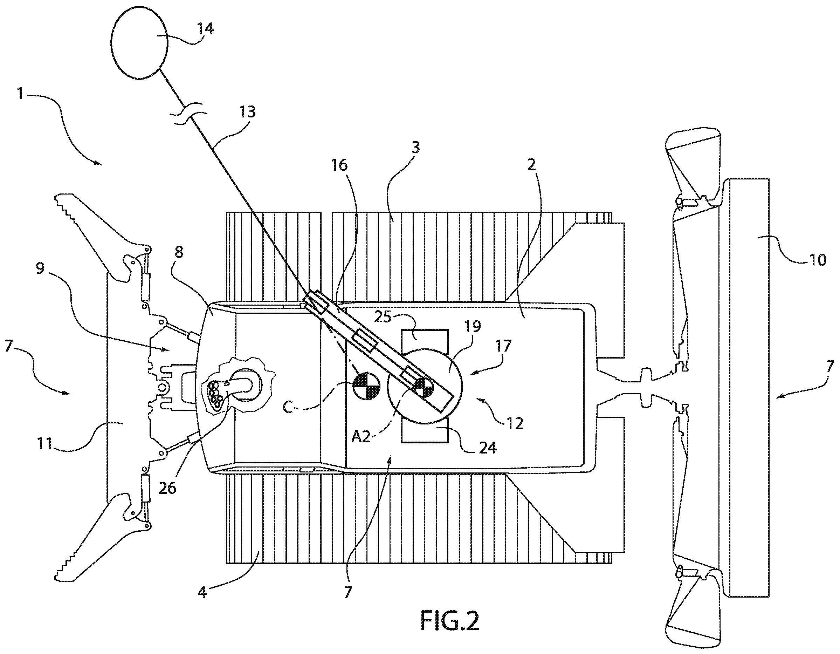

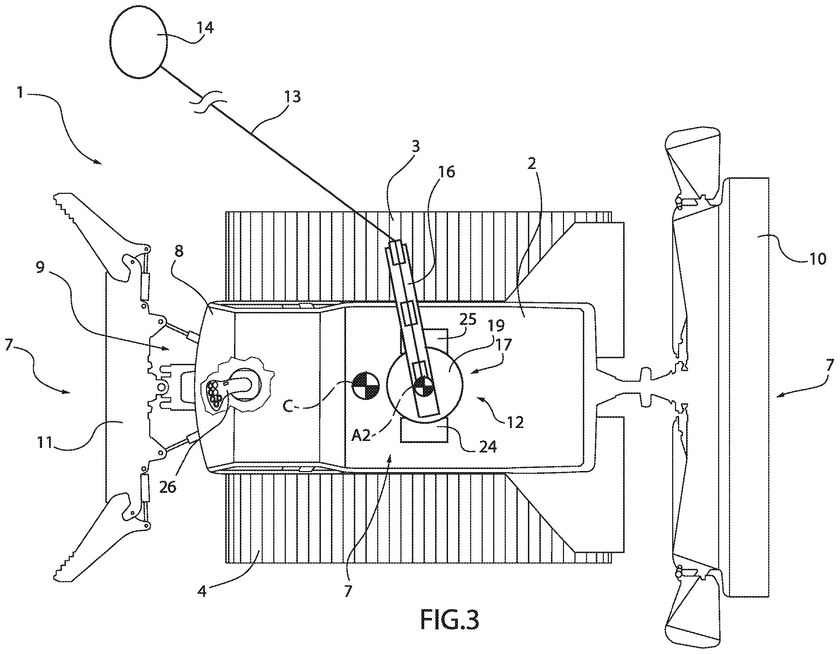

With reference to Figure 1, reference numeral 1 indicates, as a whole, a crawler vehicle for the preparation of ski runs. The crawler vehicle 1 comprises a frame 2; a track 3 (Figures 2 and 3); a track 4; a driving wheel 5 (Figures 2 and 3) and a driving wheel 6 independent of one another and coupled to the track 3 (Figures 2 and 3) and to the track 4 respectively; a plurality of tools 7 hydraulically actuated and connected to the frame 2; a cabin 8 mounted on the frame 2; and a user interface 9 arranged inside the cabin 8.

In particular, the tools 7 comprise a miller 10 connected in movable manner to the frame 2; a shovel 11 connected in movable manner to the frame 2; and a winch 12 mounted on the frame 2 for selectively unwinding and winding a cable 13 that can be anchored to a point 14 (Figures 2 and 3) outside the crawler vehicle 1.

In accordance with a non-limiting embodiment of the present invention, the cabin 8 is arranged at the front of the crawler vehicle 1 and faces the shovel 11. In such configuration, the winch 12 comprises a drum 15 which swivels around a rotation axis A1 for the winding and unwinding of the cable 13 and is arranged at the back of the crawler vehicle 1, behind the cabin 8.

Furthermore, the crawler vehicle 1 comprises an arm 16, which is mounted swivelling with respect to the frame 2 around a determined axis A2, and is configured to guide the cable 13; an actuating system 17 of the arm 16 around the determined axis A2; and a control device 18 of the actuating system 17 of the arm 16 for selectively setting one of the following operating modes when the cable 13 is under tension:
- allowing the free rotation of the arm 16 around the determined axis A2;
- rotating the arm 16 around the determined axis A2;
- locking the position of the arm 16 with respect to the frame 2.

More specifically, the crawler vehicle 1 comprises a supporting structure 19 fixed to the frame 2, which supports the drum 15 of the winch 12 and supports in a swivelling manner the arm 16; and a series of idle pulleys 20, 21, 22 and 23 which are mounted in a swivelling manner on the supporting structure 19 and on the arm 16 and have the function of guiding the cable 13 along a determined path.

The actuating system 17 comprises two actuators 24 and 25 (Figures 2 and 3) coupled to the arm 16 for selectively transmitting to the arm 16 respective torques around the determined axis A2.

In accordance with further embodiments, the number of the actuators can vary By way of example, the actuating system 17 can comprise four actuators.

The control device 18 uses the user interface 9 for allowing an operator U of the crawler vehicle 1 to control the actuating system 17 and comprises a joystick 26 controllable by said operator U.

With reference to Figures 2 and 3, the crawler vehicle 1 has a barycentre C, which is arranged at a distance from the determined axis A2.

In the case described and illustrated herein, the actuators 24 and 25 are supported by the supporting structure 19 and are arranged on opposite sides with respect to the arm 16.

In particular, the actuators 24 and 25 are two-way flow hydraulic motors supplied with a pressure variable between a minimum and a maximum value so as to transmit a variable torque between a minimum and a maximum value.

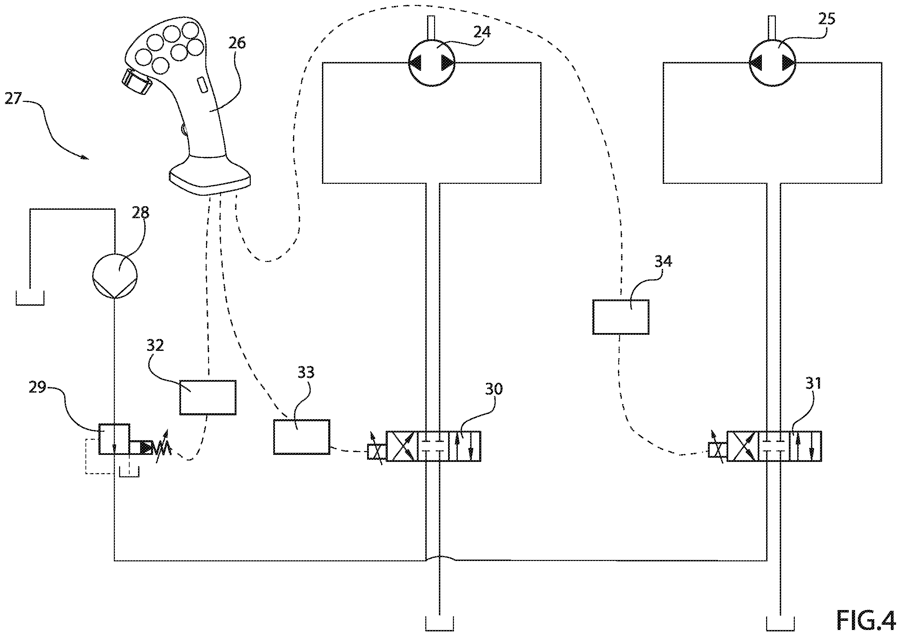

With reference to Figure 4, the actuating system 17 comprises a hydraulic circuit 27, which is supplied by a pressure source 28 and comprises a pressure regulating valve 29 for adjusting the supply pressure of each actuator 24 and 25 between a minimum and a maximum value.

Furthermore, the actuating system 17 comprises a direction control valve 30 and a direction control valve 31, each of which is configured to selectively exclude the supply to the respective actuator 24, 25 or to supply the respective actuator 24, 25 in a first direction of flow or to supply the respective actuator 24, 25 in a second direction of flow opposite to the first direction of flow.

In particular, the actuating system comprises control modules 32, 33 and 34, which are configured to control the pressure regulating valve 29, the direction control valve 30 and the direction control valve 31 respectively, depending on the commands given by the joystick 26 and on the operating mode selected.

More specifically, each control module 32, 33, 34 is configured to control the respective valve 29, 30, 31 so that the commands given by the joystick 26 supply the actuators 24 and 25 with a pressure and a direction of flow suitable to the selected operating mode.

In use and with reference to Figure 2, when the cable 13 is under tension, the operator U of the crawler vehicle 1 through the joystick 26 selects the desired operating mode depending on the particular operational needs and on the driving sensations.

With the purpose to allow the free rotation of the arm 16 around the determined axis A2, in order to arrange the arm 16 aligned with the portion of cable 13 outside the arm 16, the operator U of the crawler vehicle 1 controls the joystick 26, actuating the pressure regulating valve 29 (Figure 4) so as to apply a minimum torque to the arm 16 through each actuator 24, 25 and opposite to the minimum torque applied by the other actuator 24, 25.

In the case where the operator U of the crawler vehicle 1 wants to compensate the yawing torque exerted by the cable 13 under tension on the crawler vehicle 1, said operator U controls the joystick 26 so as to adjust, through the pressure regulating valve 29 (Figure 4), the intensity of the torque exerted by each actuator 24, 25 on the arm 16 and, through each direction control valve 30, 31 (Figure 4), the direction of the torque exerted by the respective actuator 24, 25 on the arm 16. In such circumstances, the actuators 24 and 25 apply on the arm 16 a torque concordant in direction with the yawing torque and the arm 16 is rotated around the determined axis A2 so as to substantially align the portion of cable 13 outside the arm 16 with the barycentre C of the crawler vehicle 1. This operation is repeated by the operator until the latter deems it necessary.

With reference to Figure 3, in the case where the operator U of the crawler vehicle 1 wants to steer the crawler vehicle 1 in a desired steering direction, said operator U controls the joystick 26 so that the actuators 24 and 25 apply on the arm 16 a torque opposite in direction to the direction of the desired steering and with an intensity manually adjusted. In such circumstances, the arm 16 is rotated around the determined axis A2 so as to follow the yaw of the crawler vehicle 1 around the barycentre C.

In the case where the operator U of the crawler vehicle 1 wants to move the crawler vehicle 1 forward in a substantially rectilinear direction, said operator U controls the joystick 26 so as to apply a maximum torque to the arm 16 through each actuator 24, 25 and opposite to the maximum torque applied by the other actuator 24, 25. More specifically, the pressure regulating valve 29 (Figure 4) is adjusted so as to supply with the maximum pressure the actuators 24 and 25 and the direction control valves 30 and 31 (Figure 4) are adjusted so that the respective actuators 24 and 25 apply on the arm 16 torques of opposite direction. In such circumstances, the arm 16 is substantially locked with respect to the frame 2 in the forward direction of the crawler vehicle 1. The operating mode described above is particularly indicated in the case where the crawler vehicle 1 moves downhill, allowing maintaining the crawler vehicle 1 aligned with the forward direction and preventing unwanted yaws of the crawler vehicle 1.

It is clear that variants to the present invention can be made without thereby departing from the scope of protection of the appended claims.

## Claims

1. A crawler vehicle for the preparation of ski runs; the crawler vehicle (1) comprising:
- a frame (2);
- a winch (12) mounted on the frame (2) for selectively unwinding and winding a cable (13) that can be anchored to a point (14) outside the crawler vehicle (1);
- an arm (16), which is mounted swivelling with respect to the frame (2) around a determined axis (A2), and is configured to guide the cable (13);
- an actuating system (17) of the arm (16) around the determined axis (A2), wherein the actuating system (17) comprises two actuators (24, 25) coupled to the arm (16) for selectively transmitting to the arm (16) respective torques in opposite directions around the determined axis (A2);
- a control device (18) of the actuating system (17) of the arm (16) to select an operating mode between the operating modes of:
- allowing the free rotation of the arm (16) around the determined axis (A2) when the cable (13) is under tension;
- rotating the arm (16) around the determined axis (A2) when the cable (13) is under tension;
- locking the position of the arm (16) with respect to the frame (2) when the cable (13) is under tension.

2. The crawler vehicle as claimed in Claim 1, wherein each actuator (24; 25) is configured to transmit a variable torque between a minimum and a maximum value.

3. The crawler vehicle as claimed in Claim 1 or 2, wherein each actuator (24; 25) is a two-way flow hydraulic motor supplied with a pressure variable between a minimum and a maximum value.

4. The crawler vehicle as claimed in Claim 3, wherein the actuating system (17) comprises a hydraulic circuit (27) supplied by a pressure source (28) and comprises a pressure regulating valve (29).

5. The crawler vehicle as claimed in Claim 3 or 4, wherein the actuating system (17) comprises for each hydraulic motor a direction control valve (30; 31) to selectively exclude the supply to the respective hydraulic motor or supply the respective hydraulic motor in a first direction of flow or supply the respective hydraulic motor in a second direction of flow opposite to the first direction of flow.

6. The crawler vehicle as claimed in Claim 4, wherein the control device (18) is configured to manually control the pressure regulating valve (29).

7. The crawler vehicle as claimed in Claim 5, wherein the control device (18) is configured to control each direction control valve (30; 31).

8. The crawler vehicle as claimed in any one of the foregoing Claims, wherein the control device (18) comprises a joystick (26).

9. A method to control the winch of the crawler vehicle as claimed in any one of the foregoing Claims, the method comprising:
- applying a minimum torque to the arm (16) through each of the two actuators (24, 25) and opposite to the minimum torque applied by the other actuator (24, 25) so as to allow the arm (16) to align with the cable (13).

10. A method to control the winch of the crawler vehicle as claimed in any one of the foregoing Claims 1-8, the method comprising:
- applying a maximum torque to the arm (16) through each of the two actuators (24, 25) and opposite to the maximum torque applied by the other actuator (24, 25).

## Patentansprüche

1. Raupenfahrzeug zur Präparierung von Skipisten; wobei das Raupenfahrzeug (1) umfasst:
- einen Rahmen (2);
- eine Winde (12), die an dem Rahmen (2) montiert ist, zum selektiven Abwickeln und Aufwickeln eines Seils (13), das an einem Punkt (14) außerhalb des Raupenfahrzeugs (1) verankert werden kann;
- einen Arm (16), der schwenkbar in Bezug auf den Rahmen (2) um eine bestimmte Achse (A2) montiert und konfiguriert ist, das Seil (13) zu führen;
- ein Betätigungssystem (17) des Arms (16) um die bestimmte Achse (A2), wobei das Betätigungssystem (17) zwei Aktoren (24, 25) umfasst, die mit dem Arm (16) gekoppelt sind, um selektiv auf den Arm (16) jeweilige Drehmomente in entgegengesetzte Richtungen um die bestimmte Achse (A2) zu übertragen;
- eine Steuer- bzw. Regelvorrichtung (18) des Betätigungssystems (17) des Arms (16) zum Auswählen eines Betriebsmodus zwischen den folgenden Betriebsmodi:
- Ermöglichen der freien Drehung des Arms (16) um die bestimmte Achse (A2), wenn das Seil (13) unter Spannung ist;
- Drehen des Arms (16) um die bestimmte Achse (A2), wenn das Seil (13) unter Spannung ist;
- Verriegeln bzw. Arretieren der Position des Arms (16) in Bezug auf den Rahmen (2), wenn das Seil (13) unter Spannung ist.

2. Raupenfahrzeug nach Anspruch 1, wobei jeder Aktor (24; 25) konfiguriert ist, ein variables Drehmoment zwischen einem Minimal- und einem Maximalwert zu übertragen.

3. Raupenfahrzeug nach Anspruch 1 oder 2, wobei jeder Aktor (24; 25) ein Zweiwege-Hydraulikmotor ist, der mit einem zwischen einem Minimal- und einem Maximalwert variablen Druck versorgt wird.

4. Raupenfahrzeug nach Anspruch 3, wobei das Betätigungssystem (17) einen von einer Druckquelle (28) versorgten Hydraulikkreis (27) und ein Druckregelventil (29) umfasst.

5. Raupenfahrzeug nach Anspruch 3 oder 4, wobei das Betätigungssystem (17) für jeden Hydraulikmotor ein Richtungssteuerungs- bzw. -regelungsventil bzw. Wegeventil (30; 31) umfasst, um die Versorgung des jeweiligen Hydraulikmotors selektiv auszuschließen bzw. zu unterbrechen oder den jeweiligen Hydraulikmotor in einer ersten Durchflussrichtung zu versorgen oder den jeweiligen Hydraulikmotor in einer zweiten, der ersten Durchflussrichtung entgegengesetzten Durchflussrichtung zu versorgen.

6. Raupenfahrzeug nach Anspruch 4, wobei die Steuer- bzw. Regelvorrichtung (18) konfiguriert ist, das Druckregelventil (29) manuell zu steuern bzw. zu regeln.

7. Raupenfahrzeug nach Anspruch 5, wobei die Steuer- bzw. Regelvorrichtung (18) konfiguriert ist, jedes Wegeventil (30; 31) zu steuern bzw. zu regeln.

8. Raupenfahrzeug nach einem der vorhergehenden Ansprüche, wobei die Steuer- bzw. Regelvorrichtung (18) einen Joystick (26) umfasst.

9. Verfahren zum Steuern bzw. Regeln der Winde des Raupenfahrzeugs nach einem der vorhergehenden Ansprüche, umfassend:
- Aufbringen eines minimalen Drehmoments auf den Arm (16) durch jeden der zwei Aktoren (24, 25) und entgegengesetzt zu dem minimalen Drehmoment, das von dem anderen Aktor (24, 25) aufgebracht wird, um dem Arm (16) zu erlauben, sich mit dem Seil (13) auszurichten.

10. Verfahren zum Steuern bzw. Regeln der Winde des Raupenfahrzeugs nach einem der vorhergehenden Ansprüche 1-8, umfassend:
- Aufbringen eines maximalen Drehmoments auf den Arm (16) durch jeden der zwei Aktoren (24, 25) und entgegengesetzt zu dem maximalen Drehmoment, das von dem anderen Aktor (24, 25) aufgebracht wird.

## Revendications

1. Véhicule à chenilles pour la préparation de pistes de ski; le véhicule à chenilles (1) comprenant :
- un châssis (2) ;
- un treuil (12) monté sur le châssis (2) pour dérouler et enrouler sélectivement un câble (13) qui peut être ancré à un point (14) extérieur au véhicule à chenilles (1) ;
- un bras (16), qui est monté pivotant par rapport au châssis (2) autour d'un axe déterminé (A2), et est configuré pour guider le câble (13) ;
- un système d'actionnement (17) du bras (16) autour de l'axe déterminé (A2), dans lequel le système d'actionnement (17) comprend deux actionneurs (24, 25) couplés au bras (16) pour transmettre sélectivement au bras (16) des couples respectifs dans des sens opposés autour de l'axe déterminé (A2) ;
- un dispositif de commande (18) du système d'actionnement (17) du bras (16) pour sélectionner un mode de fonctionnement parmi les modes de fonctionnement de :
- permettre la libre rotation du bras (16) autour de l'axe déterminé (A2) lorsque le câble (13) est sous tension ;
- faire tourner le bras (16) autour de l'axe déterminé (A2) lorsque le câble (13) est sous tension ;
- verrouiller la position du bras (16) par rapport au châssis (2) lorsque le câble (13) est sous tension.

2. Véhicule à chenilles selon la revendication 1, dans lequel chaque actionneur (24; 25) est configuré pour transmettre un couple variable entre une valeur minimale et une valeur maximale.

3. Véhicule à chenilles selon la revendication 1 ou 2, dans lequel chaque actionneur (24; 25) est un moteur hydraulique à flux bidirectionnel alimenté avec une pression variable entre une valeur minimale et une valeur maximale.

4. Véhicule à chenilles selon la revendication 3, dans lequel le système d'actionnement (17) comprend un circuit hydraulique (27) alimenté par une source de pression (28) et comprend une vanne de régulation de pression (29).

5. Véhicule à chenilles selon la revendication 3 ou 4, dans lequel le système d'actionnement (17) comprend pour chaque moteur hydraulique une vanne de commande de sens (30; 31) pour exclure sélectivement l'alimentation du moteur hydraulique respectif ou alimenter le moteur hydraulique respectif dans un premier sens d'écoulement ou alimenter le moteur hydraulique respectif dans un deuxième sens d'écoulement opposé au premier sens d'écoulement.

6. Véhicule à chenilles selon la revendication 4, dans lequel le dispositif de commande (18) est configuré pour commander manuellement la vanne de régulation de pression (29).

7. Véhicule à chenilles selon la revendication 5, dans lequel le dispositif de commande (18) est configuré pour commander chaque vanne de commande de sens (30; 31).

8. Véhicule à chenilles selon l'une quelconque des revendications précédentes, dans lequel le dispositif de commande (18) comprend une manette (26).

9. Procédé pour commander le treuil du véhicule à chenilles selon l'une quelconque des revendications précédentes, le procédé comprenant :
- l'application d'un couple minimal au bras (16) par l'intermédiaire de chacun des deux actionneurs (24, 25) et opposé au couple minimal appliqué par l'autre actionneur (24, 25) de manière à permettre au bras (16) de s'aligner avec le câble (13).

10. Procédé pour commander le treuil du véhicule à chenilles selon l'une quelconque des revendications 1 à 8 précédentes, le procédé comprenant :
- l'application d'un couple maximal au bras (16) par l'intermédiaire de chacun des deux actionneurs (24, 25) et opposé au couple maximal appliqué par l'autre actionneur (24, 25).
